# EUROPEAN PATENT APPLICATION

(11) **EP 4 592 555 A1**
(43) Date of publication of application: **30.07.2025**
(21) Application number: 23867837.9
(22) Date of filing: 14.06.2023
(51) Int. Cl.: F16H 3/66

(54) **UNIT**

(30) Priority: 22.09.2022 JP 2022151348
(71) Applicant: Jatco Ltd., Shizuoka 417-8585 (JP)
(72) Inventor: KAMIYAMA, Akira, Fuji-shi, Shizuoka 417-8585 (JP); WATANABE, Kenichi, Fuji-shi, Shizuoka 417-8585 (JP); HIROSE, Ikuo, Fuji-shi, Shizuoka 417-8585 (JP)
(74) Representative: Hoefer & Partner Patentanwälte mbB
(86) International application number: PCT/JP2023/022051
(87) International publication number: WO 2024/062709

(57) **Abstract**

[PROBLEMS] In a unit having a power transmission mechanism therein, a step ratio at the time of shifting is reduced.

[SOLUTIONS] Provided is a unit including: an input element; an output element; and a gear device which is implemented by coupling respective rotational elements of a first planetary gear mechanism and a second planetary gear mechanism at one place and in which, on an alignment chart, a second rotational part which is the coupled rotational elements is disposed between a first rotational part and a third rotational part, and a fifth rotational part is disposed between the second rotational part and a fourth rotational part. In the unit, the input element is connected to the first rotational part, the output element is connected to the fifth rotational part, the third rotational part is fixed, the fourth rotational part is selectively connectable to a fixed element or the first rotational part, and the fifth rotational part is connectable to the first rotational part.

## Description

### TECHNICAL FIELD

The present invention relates to a unit having a power transmission mechanism therein.

### BACKGROUND ART

Patent Document 1 discloses an automatic transmission unit for an electric vehicle with two forward speeds. In the unit, by switching engaged states of two friction clutches, it is possible to achieve a first speed and a second speed having a lower transmission gear ratio (= input rotation speed/output rotation speed) than that of the first speed.

Similar units are disclosed in Patent Documents 2 to 4.

### PRIOR ART DOCUMENT

### PATENT DOCUMENT

Patent Document 1: German Patent Application Publication No. 102019116360
Patent Document 2: German Patent Application Publication No. 102019119951
Patent Document 3: CN106195194A
Patent Document 4: CN206000959U

### SUMMARY OF INVENTION

### PROBLEM TO BE SOLVED BY THE INVENTION

In the automatic transmission unit for an electric vehicle with two forward speeds, a torque amplification effect due to deceleration becomes higher as the transmission gear ratio at the first speed is increased, so that a maximum torque of a motor can be reduced as the transmission gear ratio at the first speed is increased, and a motor having a small size can be selected. On the other hand, the smaller the transmission gear ratio at the second speed, the lower a rotation speed of the motor at the time of achieving a certain vehicle speed, which is advantageous during high-speed cruising.

However, when the transmission gear ratios at the first speed and the second speed are respectively set based on the above design concept, a step ratio (= transmission gear ratio at first speed/transmission gear ratio at second speed) at the time of switching between the first speed and the second speed is increased, and a shift shock is increased.

The present invention has been made in view of such technical problems, and an object of the present invention is to reduce a step ratio at the time of shifting in a unit having a power transmission mechanism therein.

### MEANS FOR SOLVING THE PROBLEM

According to an aspect of the present invention, there is provided a unit including:
an input element;
an output element; and
a gear device which is implemented by coupling respective rotational elements of a first planetary gear mechanism and a second planetary gear mechanism at one place and in which, on an alignment chart, a second rotational part which is the coupled rotational elements is disposed between a first rotational part and a third rotational part, and a fifth rotational part is disposed between the second rotational part and a fourth rotational part, in which
the input element is connected to the first rotational part,
the output element is connected to the fifth rotational part,
the third rotational part is fixed,
the fourth rotational part is selectively connectable to a fixed element or the first rotational part, and
the fifth rotational part is connectable to the first rotational part.

### EFFECT OF THE INVENTION

According to the above aspect, a rotation speed of the second rotational part with respect to a rotation speed of the first rotational part is reduced at a constant ratio. By switching a connection destination of the fourth rotational part in this state, two gear positions can be achieved. In addition, by connecting the fifth rotational part to the first rotational part and directly connecting input and output, a gear position of a transmission gear ratio of 1 is achieved. That is, three gear positions can be achieved. Since the step ratio is reduced, an appropriate transmission gear ratio can be set according to a speed range.

### BRIEF DESCRIPTION OF DRAWINGS

[FIG. 1] FIG. 1 is a skeleton diagram of a unit according to an embodiment of the present invention.
[FIG. 2] FIG. 2 is an engagement table showing engaged states of respective engagement elements at respective gear positions.
[FIG. 3] FIG. 3 is an alignment chart of the unit.
[FIG. 4A] FIG. 4A is a skeleton diagram of a modification.
[FIG. 4B] FIG. 4B is an alignment chart of the modification.
[FIG. 5A] FIG. 5A is a skeleton diagram of a modification.
[FIG. 5B] FIG. 5B is an alignment chart of the modification.

### DESCRIPTION OF EMBODIMENTS

Hereinafter, embodiments of the present invention will be described with reference to the accompanying drawings. Definitions of terms used in the present description are as follows.

The term of "unit" means a general device having a power transmission mechanism such as a gear mechanism and a differential gear mechanism therein, and includes a motor unit having a motor and a power transmission mechanism, an automatic transmission unit, a reducer unit, and the like.

The term of "transmission gear ratio" is a value obtained by dividing an input rotation speed of the unit by an output rotation speed thereof. The term of "input rotation" includes not only rotation input to the unit from a power source outside the unit but also rotation input to the unit from a power source inside the unit.

The term of "step ratio" is a value obtained by dividing a larger transmission gear ratio (for low speed) by a smaller transmission gear ratio (for high speed) with respect to two transmission gear ratios achieved by the unit.

The term of "axial direction" means an axial direction of a rotating shaft of a component constituting the unit. The component includes a motor, a gear mechanism, a differential gear mechanism, or the like. The term of "radial direction" means a radial direction from a central axis of the rotating shaft.

The term of "housing" means an accommodation body that accommodates a motor, an inverter, and a power transmission mechanism, and includes one or more cases. An aspect in which a case that accommodates the motor, a case that accommodates the inverter, and a case that accommodates the power transmission mechanism are integrally formed is called "3-in-1".

The term of "motor" means a rotating electrical machine having an electric motor function, and may have a generator function in addition to the electric motor function.

The expression of "an element A is connected to an element B" means that the element A is connected to the element B on an upstream or downstream side in such a manner that power can be transmitted between the element A and the element B. An input side of the power is the upstream side, and an output side of the power is the downstream side. The element A is not limited to be connected to the element B directly or via another member, and may be connected to the element B via a clutch or the like.

The expression of "the element A is coupled to the element B" means a state in which the element A and the element B are directly coupled to each other or indirectly coupled to each other via another member, and the element A and the element B are integrated. In other words, it can be said to be a state in which the element A and the element B rotate integrally. In addition, the expression means a state in which the element A and the element B are connected to each other without a brake or a clutch interposed therebetween, and can be said to be a state in which the element A and the element B are always connected to each other.

The expression of "the element A is fixed to the element B" includes both an aspect in which the element A is directly fixed to the element B and an aspect in which the element A is fixed to the element B via an element C other than the elements A and B. The expression of "the element A is fixed" means that the element A is fixed to another element and is in a non-rotatable state.

The expression of "the element A and the element B overlap each other when viewed in a predetermined direction" refers to a state in which the element A and the element B are arranged in the predetermined direction (axial direction, radial direction, gravity direction, or the like), and the element A and the element B at least partially overlap each other when observed from the predetermined direction. This is synonymous with the expression of "the element A and the element B overlap in the predetermined direction". In a case where the element A and the element B overlap each other when viewed in the axial direction, the element A and the element B are coaxial. In a case where the element A and the element B are drawn so as to be arranged in the predetermined direction in the drawings, it means that the element A and the element B overlap each other when viewed in the predetermined direction.

On the other hand, the expression of "the element A and the element B do not overlap each other when viewed in the predetermined direction" refers to a state in which the element A and the element B are not arranged in the predetermined direction (axial direction, radial direction, gravity direction, vehicle traveling direction, or the like) and there is no portion at which the element A and the element B overlap each other when viewed from the predetermined direction. This is synonymous with the expression of "the element A and the element B do not overlap each other in the predetermined direction". In a case where the element A and the element B are drawn so as not to be arranged in the predetermined direction in the drawings, it means that the element A and the element B do not overlap each other when viewed in the predetermined direction.

The expression of "the element A is disposed between the element B and the element C when viewed in the predetermined direction" means that the element A is observed to be between the element B and the element C when observed from the predetermined direction (axial direction, radial direction, gravity direction, or the like). For example, in a case where the element B, the element A, and the element C are arranged in this order along the axial direction, it is observed that the element A is located between the element B and the element C when viewed in the radial direction, so that it can be said that the element A is located between the element B and the element C. The element A does not need to overlap the elements B and C when viewed in the axial direction. In a case where the element A is drawn between the element B and the element C in the drawings, it means that the element A is located between the element B and the element C when viewed in the predetermined direction.

The expression of "the element A is located axially outward of the element B" means that the element A is disposed on one side in the axial direction or the other side in the axial direction of the element B, and includes a case where the element A and the element B overlap each other when viewed in the axial direction, and a case where the element A and the element B have different positions in the radial direction and the element A and the element B do not overlap each other.

The expression of "the element A is disposed radially outward (or radially inward) of the element B" means that a radial position of the element A is located outward (or inward) of a radial position of the element B, and includes a case where the element A and the element B overlap each other when viewed in the radial direction, and a case where the element A and the element B have different axial positions and the element A and the element B do not overlap each other.

The expression of "disposed close to each other" means a state in which there is a portion where two elements overlap each other when viewed in the axial direction or the radial direction, and no other element is sandwiched between the two elements. For example, the expression of "two engagement elements are disposed close to each other" means that no planetary gear mechanism or the like is disposed between the two engagement elements. In a case where no other element is drawn between the element A and the element B in the drawings, it means that the element A and the element B are disposed close to each other.

The terms of "one side of the engagement element" and "the other side of the engagement element" mean two elements included in the engagement element that become relatively non-rotatable when the engagement element is in an engaged state and become relatively rotatable when the engagement element is in a released state. The terms of "one side of the engagement element" and "the other side of the engagement element" may be a combination of rotational elements or a combination of a rotational element and a non-rotational element, and are generally referred to as a clutch for the former and a brake for the latter. Further, the term of "a single side of the engagement element" means either of "one side of the engagement element" and "the other side of the engagement element".

Other terms are appropriately defined in the description.

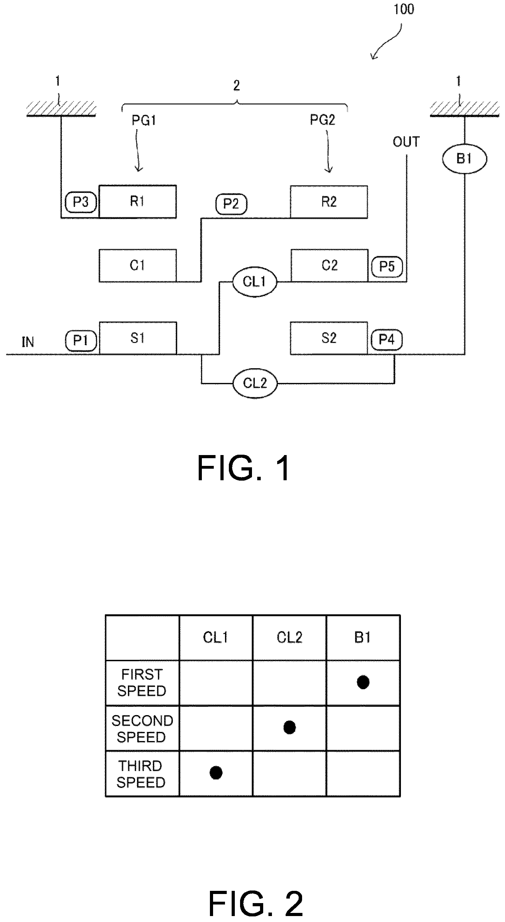

FIG. 1 is a skeleton diagram illustrating a basic structure of a unit 100 according to an embodiment of the present invention. The unit 100 is an automatic transmission unit with three forward speeds for an electric vehicle that shifts rotation input to an input element IN from a motor (not illustrated) serving as a power source at a transmission gear ratio corresponding to a gear position and transmits the shifted rotation from an output element OUT to a drive wheel (not illustrated). The input element IN and the output element OUT are implemented by gears, rotating shafts, and the like, respectively. Since the motor can switch between forward rotation and reverse rotation, the unit 100 is clearly different in design concept from a unit for a vehicle using an internal combustion engine as a power source in that the unit 100 does not have a reverse gear.

The unit 100 is a so-called 3-in-1 unit in which the input element IN, a gear device 2, first to third engagement elements CL1, CL2, and B1, the output element OUT, the motor (not illustrated), and an inverter (not illustrated) are accommodated in a housing 1. The housing 1 is non-rotatably fixed to the vehicle.

One end of the input element IN is connected to an output shaft of the motor, and the input element IN rotates by power input from the motor. A rotation speed of the input element IN is an input rotation speed of the unit 100. The motor is electrically connected to a battery (not illustrated) outside the unit 100 via the inverter, and functions as an electric motor by receiving power supply from the battery. The motor can also function as a generator.

The gear device 2 is implemented by coupling respective rotational elements of the first planetary gear mechanism PG1 and the second planetary gear mechanism PG2 at one place.

The first planetary gear mechanism PG1 is a single pinion planetary gear mechanism including a first sun gear S1 as a first rotational element, a plurality of first pinion gears (not illustrated), a first carrier C1 as a second rotational element that rotatably supports the plurality of first pinion gears, and a first ring gear R1 as a third rotational element. The first sun gear S1 meshes with the plurality of first pinion gears, and the plurality of first pinion gears mesh with the first ring gear R1.

The second planetary gear mechanism PG2 is a single pinion planetary gear mechanism including a second sun gear S2 as a fourth rotational element, a plurality of second pinion gears (not illustrated), a second carrier C2 as a fifth rotational element that rotatably supports the plurality of second pinion gears, and a second ring gear R2 as a sixth rotational element. The second sun gear S2 meshes with the plurality of second pinion gears, and the plurality of second pinion gears mesh with the second ring gear R2.

The first carrier C1 is coupled to the second ring gear R2. By coupling the first planetary gear mechanism PG1 and the second planetary gear mechanism PG2 at one place in this manner, a first rotational part P1 is implemented by the first sun gear S1, a second rotational part P2 is implemented by the first carrier C1 and the second ring gear R2, a third rotational part P3 is implemented by the first ring gear R1, a fourth rotational part P4 is implemented by the second sun gear S2, and a fifth rotational part P5 is implemented by the second carrier C2.

The first rotational part P1 is connected to the input element IN. The fifth rotational part P5 is connected to the output element OUT. The third rotational part P3 is fixed to the housing 1 serving as a fixed element.

A rotation speed of the output element OUT is an output rotation speed of the unit 100.

The first engagement element CL1 is a hydraulic clutch or an electric clutch. In a case where two portions of the first engagement element CL1 to be engaged when the first engagement element CL1 is in an engaged state are defined as one side and the other side, the one side is connected to the first rotational part P1 implemented by the first sun gear S1, and the other side is connected to the fifth rotational part P5 implemented by the second carrier C2. As a result, when the first engagement element CL1 is engaged, the fifth rotational part P5 implemented by the second carrier C2 can be connected to the first rotational part P1 implemented by the first sun gear S1.

The second engagement element CL2 is a hydraulic clutch or an electric clutch. In a case where two portions of the second engagement element CL2 to be engaged when the second engagement element CL2 is in an engaged state are defined as one side and the other side, the one side is connected to the first rotational part P1 implemented by the first sun gear S1, and the other side is connected to the fourth rotational part P4 implemented by the second sun gear S2. As a result, when the second engagement element CL2 is engaged, the fourth rotational part P4 implemented by the second sun gear S2 can be connected to the first rotational part P1 implemented by the first sun gear S1.

In this disposition, the first engagement element CL1 and the second engagement element CL2 are disposed between the first planetary gear mechanism PG1 and the second planetary gear mechanism PG2, so that a hydraulic actuator that supplies a hydraulic pressure from a control valve unit with less layout restriction is preferably used as an actuator that drives the first engagement element CL1 and an actuator that drives the second engagement element CL2.

The one side of the first engagement element CL1 and the one side of the second engagement element CL2 are connected to the first rotational part P1 and rotate integrally with each other, so that these can be commonly used, that is, implemented as an integrated component. For example, in a case where each of the first engagement element CL1 and the second engagement element CL2 is implemented by a multi-plate clutch in which a plurality of friction plates are disposed between a drum and a hub, the first engagement element CL1 and the second engagement element CL2 may be implemented as an integrated component by forming the hub (of one element) on an outer periphery of the drum (of the other element). Accordingly, the number of components of the unit 100 can be reduced.

The third engagement element B1 is a hydraulic brake or an electric brake. In a case where two portions of the third engagement element B1 to be engaged when the third engagement element B1 is in an engaged state are defined as one side and the other side, the one side is connected to the fourth rotational part P4 implemented by the second sun gear S2, and the other side is fixed to the housing 1. As a result, when the third engagement element B1 is engaged, the fourth rotational part P4 implemented by the second sun gear S2 can be fixed to the housing 1.

As the third engagement element B1, either of an actuator that is less susceptible to the layout restriction and an actuator that is susceptible to the layout restriction can be adopted.

The third engagement element B1 may be implemented by a selectable one-way clutch. The selectable one-way clutch is a clutch that is implemented by a pair of ratchet mechanisms capable of switching an operation state by an electric actuator and restrict rotation in different directions, and that enters a one-way clutch state when only one of the pair of ratchet mechanisms is caused to operate, and enters an engaged state when both of the pair of ratchet mechanisms are caused to operate.

In this arrangement, the other side of the second engagement element CL2 and the one side of the third engagement element B1 can be commonly used (integrated), whereby the number of components of the unit 100 can be reduced.

By engaging one of the second engagement element CL2 and the third engagement element B1 and releasing the other thereof, it is possible to selectively connect the fourth rotational part P4 implemented by the second sun gear S2 to the housing 1 serving as a fixed element, or to the first rotational part P1 implemented by the first sun gear S1. In addition, by engaging the first engagement element CL1, it is possible to connect the fifth rotational part P5 implemented by the second carrier C2 to the first rotational part P1 implemented by the first sun gear S1.

FIG. 2 is an engagement table showing relations between the engaged states of the first to third engagement elements CL1, CL2, and B1 and gear positions achieved in the unit 100. In the table, a filled circle indicates an engaged state, and no mark indicates a released state.

As shown in the engagement table, a first speed is achieved by engaging the third engagement element B1 and releasing the first engagement element CL1 and the second engagement element CL2. A second speed is achieved by engaging the second engagement element CL2 and releasing the first engagement element CL1 and the third engagement element B1. A third speed is achieved by engaging the first engagement element CL1 and releasing the second engagement element CL2 and the third engagement element B1.

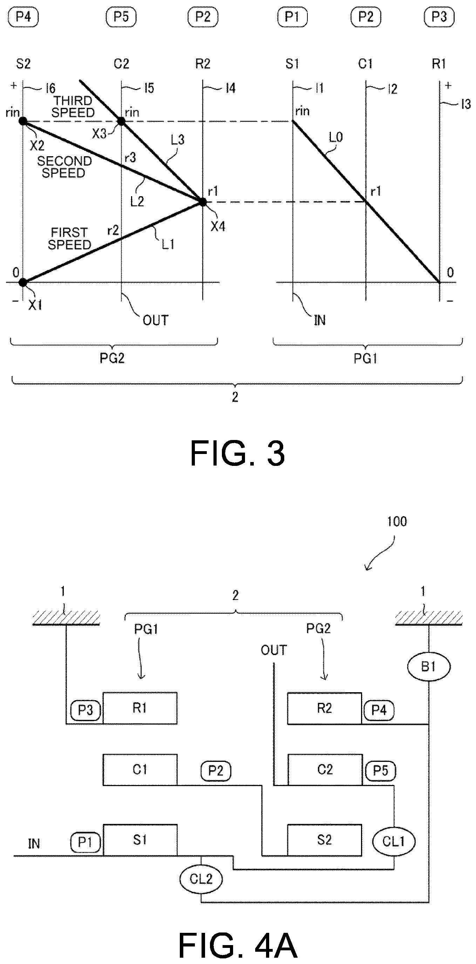

FIG. 3 is an alignment chart of the unit 100. In the alignment chart, the second rotational part P2 is disposed between the first rotational part P1 and the third rotational part P3, and the fifth rotational part P5 is disposed between the second rotational part P2 and the fourth rotational part P4.

Three vertical lines l1 to l3 of the first planetary gear mechanism PG1 indicate, in order from a left side, the first sun gear S1 constituting the first rotational part P1, the first carrier C1 constituting the second rotational part P2, and the first ring gear R1 constituting the third rotational part P3. Three vertical lines l4 to l6 of the second planetary gear mechanism PG2 indicate, in order from a right side, the second ring gear R2 constituting the second rotational part P2, the second carrier C2 constituting the fifth rotational part P5, and the second sun gear S2 constituting the fourth rotational part P4. In FIG. 3, the vertical line l2 corresponding to the first carrier C1 and the vertical line l4 corresponding to the second ring gear R2 are illustrated for easy understanding. However, since the first carrier C1 and the second ring gear R2 are coupled to each other, the vertical line l2 and the vertical line l4 are actually the same vertical line.

Since the first planetary gear mechanism PG1 is a single pinion planetary gear mechanism, the first carrier C1 is disposed between the first sun gear S1 and the first ring gear R1. Since the second planetary gear mechanism PG2 is also a single pinion planetary gear mechanism, the second carrier C2 is disposed between the second sun gear S2 and the second ring gear R2.

Since the input element IN is connected to the first rotational part P1, the vertical line l1 corresponds to the input element IN.

Since the output element OUT is connected to the fifth rotational part P5, the vertical line 15 corresponds to the output element OUT.

A straight line L0 indicates rotation speeds of the respective rotational parts P1 to P3 in the first planetary gear mechanism PG1. Since the input element IN is connected to the first rotational part P1 and the third rotational part P3 is fixed, when the rotation speed of the input element IN is defined as rin, the rotation speed of the second rotational part P2 is r1 which is a vertical coordinate of an intersection of the straight line L0 and the vertical line l2. In this manner, in the first planetary gear mechanism PG1, the rotation speed of the second rotational part P2 with respect to the rotation speed of the first rotational part P1 is reduced at a constant ratio. Intervals between the respective vertical lines of the first planetary gear mechanism PG1 are determined according to a gear ratio of the first planetary gear mechanism PG1 (the number of teeth of the first sun gear S1/the number of teeth of the first ring gear R1).

As indicated by a broken line in FIG. 3, the rotation speed of the first carrier C1 and the rotation speed of the second ring gear R2 are equal to each other, so that when the rotation speed of the input element IN is defined as rin, both the rotation speed of the first carrier C1 and the rotation speed of the second ring gear R2 are r1.

Straight lines L1 to L3 indicate rotation speeds of the respective rotational parts P2, P4, and P5 in the second planetary gear mechanism PG2, and correspond to respective gear positions. The rotation speeds of the respective rotational parts P2, P4, and P5 at the respective gear positions are represented by vertical coordinates of intersections of the straight lines L1 to L3 corresponding to the respective gear positions and the vertical lines l4 to l6. Intervals between the respective vertical lines of the second planetary gear mechanism PG2 are determined according to a gear ratio of the second planetary gear mechanism PG2 (the number of teeth of the second sun gear S2/the number of teeth of the second ring gear R2).

At the first speed, the third engagement element B1 is engaged, and the first engagement element CL1 and the second engagement element CL2 are released. As a result, the rotation speed of the fourth rotational part P4 becomes zero, so that when the rotation speed of the input element IN is defined as rin, the straight line L1 corresponding to the first speed is a straight line passing through a point X1 (rotation speed of zero) and a point X4 (rotation speed of r1). The rotation speed of the output element OUT is r2 which is a vertical coordinate of an intersection of the straight line L1 and the vertical line 15. Therefore, a transmission gear ratio at the first speed is rin/r2.

At the second speed, the second engagement element CL2 is engaged, and the first engagement element CL1 and the third engagement element B1 are released. As a result, as indicated by a dot-dashed line in FIG. 3, the rotation speeds of the fourth rotational part P4 and the first rotational part P1 are equal to each other, so that when the rotation speed of the input element IN is defined as rin, the straight line L2 corresponding to the second speed is a straight line passing through a point X2 (rotation speed of rin) and the point X4 (rotation speed of r1). The rotation speed of the output element OUT is r3 which is a vertical coordinate of an intersection of the straight line L2 and the vertical line l5. Therefore, a transmission gear ratio at the second speed is rin/r3. Since r3 is larger than r2, the transmission gear ratio at the second speed is smaller than the transmission gear ratio at the first speed.

At the third speed, the first engagement element CL1 is engaged, and the second engagement element CL2 and the third engagement element B1 are released. As a result, as indicated by the dot-dashed line in FIG. 3, the rotation speeds of the fifth rotational part P5 and the first rotational part P1 are equal to each other, so that when the rotation speed of the input element IN is defined as rin, the straight line L3 corresponding to the third speed is a straight line passing through a point X3 (rotation speed of rin) and the point X4 (rotation speed of r1). Since the rotation speeds of the input element IN and the output element OUT are equal to each other, a transmission gear ratio at the third speed is 1, which is smaller than the transmission gear ratios at the first speed and the second speed.

In the unit 100 of the present embodiment, according to the configuration of the first planetary gear mechanism PG1, the rotation speed of the second rotational part P2 with respect to the rotation speed of the first rotational part P1 is reduced at a constant ratio. In this state, by selectively switching a connection destination of the fourth rotational part P4 to the housing 1 or the first rotational part P1, two gear positions (first speed and second speed) can be achieved. In addition, by connecting the fifth rotational part P5 to the first rotational part P1 and directly connecting input and output, a gear position (third speed) of a transmission gear ratio of 1 can be achieved.

As described above, in the unit 100, since three gear positions can be achieved, a step ratio thereof is smaller than that in the unit having two forward speeds, and a shock at the time of shifting can be suppressed to be smaller than that in the unit having two forward speeds. In addition, since the first to third speeds can be used for low speed, medium speed, and high speed, respectively, an appropriate transmission gear ratio can be set according to a speed range.

Next, modifications of the embodiment of the present invention will be described.

FIG. 4A is a skeleton diagram of the unit 100 according to a modification.

In the modification of FIG. 4A, the first planetary gear mechanism PG1 and the second planetary gear mechanism PG2 are single pinion planetary gear mechanisms as in the unit 100 illustrated in FIG. 1.

In the modification of FIG. 4A, the first rotational part P1 is implemented by the first sun gear S1 serving as the first rotational element, the second rotational part P2 is implemented by coupling the first carrier C1 serving as the second rotational element and the second sun gear S2 serving as the sixth rotational element, the third rotational part P3 is implemented by the first ring gear R1 serving as the third rotational element, the fourth rotational part P4 is implemented by the second ring gear R2 serving as the fourth rotational element, and the fifth rotational part P5 is implemented by the second carrier C2 serving as the fifth rotational element.

The first rotational part P1 is connected to the input element IN. The fifth rotational part P5 is connected to the output element OUT. The third rotational part P3 is fixed to the housing 1 serving as a fixed element.

The one side of the first engagement element CL1 is connected to the first sun gear S1 serving as the first rotational part P1, the other side of the first engagement element CL1 is connected to the second carrier C2 serving as the fifth rotational part P5, the one side of the second engagement element CL2 is connected to the first sun gear S1 serving as the first rotational part P1, the other side of the second engagement element CL2 is connected to the second ring gear R2 serving as the fourth rotational part P4, the one side of the third engagement element B1 is connected to the second ring gear R2 serving as the fourth rotational part P4, and the other side of the third engagement element B1 is fixed to the housing 1.

In the modification of FIG. 4A, the one side of the first engagement element CL1 and the one side of the second engagement element CL2 can be commonly used (integrated), whereby the number of components of the unit 100 can be reduced.

In addition, the other side of the second engagement element CL2 and the one side of the third engagement element B1 can be commonly used (integrated), whereby the number of components of the unit 100 can be reduced.

An engagement table of the modification of FIG. 4A is the same as that of the skeleton diagram of FIG. 1 illustrated in FIG. 2.

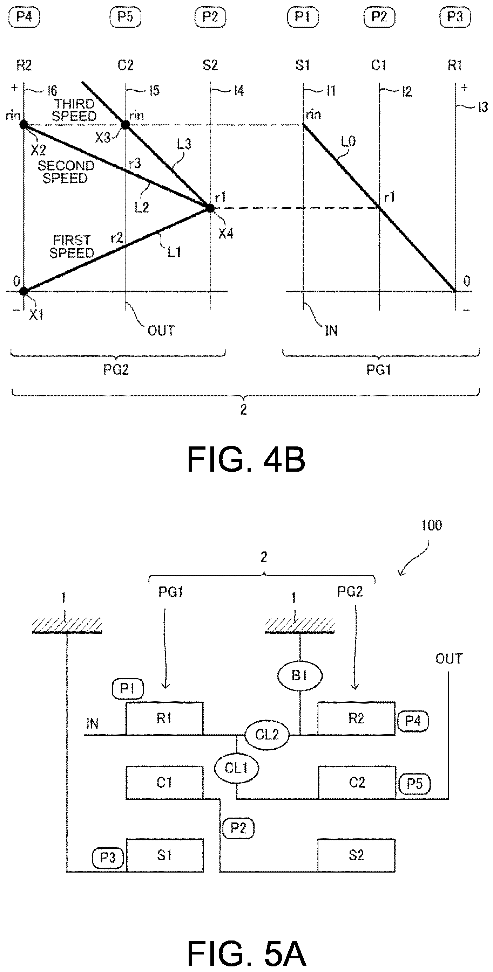

FIG. 4B is an alignment chart of the modification of FIG. 4A.

Three vertical lines 11 to l3 of the first planetary gear mechanism PG1 indicate, in order from a left side, the first sun gear S1 constituting the first rotational part P1, the first carrier C1 constituting the second rotational part P2, and the first ring gear R1 constituting the third rotational part P3. Three vertical lines 14 to l6 of the second planetary gear mechanism PG2 indicate, in order from a right side, the second sun gear S2 constituting the second rotational part P2, the second carrier C2 constituting the fifth rotational part P5, and the second ring gear R2 constituting the fourth rotational part P4.

In the alignment chart of FIG. 4B, rotational elements constituting the first to fifth rotational parts P1 to P5 are different from those illustrated in FIG. 3, but a connection relation between the first to fifth rotational parts P1 to P5 and the first to third engagement elements CL1, CL2, and B1 is the same as that illustrated in FIG. 3, so that the alignment charts are substantially the same.

FIG. 5A is a skeleton diagram of the unit 100 according to a modification.

In the modification of FIG. 5A, the first planetary gear mechanism PG1 and the second planetary gear mechanism PG2 are single pinion planetary gear mechanisms as in the unit 100 illustrated in FIG. 1.

In the modification of FIG. 5A, the first rotational part P1 is implemented by the first ring gear R1 serving as the first rotational element, the second rotational part P2 is implemented by coupling the first carrier C1 serving as the second rotational element and the second sun gear S2 serving as the sixth rotational element, the third rotational part P3 is implemented by the first sun gear S1 serving as the third rotational element, the fourth rotational part P4 is implemented by the second ring gear R2 serving as the fourth rotational element, and the fifth rotational part P5 is implemented by the second carrier C2 serving as the fifth rotational element.

The first rotational part P1 is connected to the input element IN. The fifth rotational part P5 is connected to the output element OUT. The third rotational part P3 is fixed to the housing 1 serving as a fixed element.

The one side of the first engagement element CL1 is connected to the first ring gear R1 serving as the first rotational part P1, the other side of the first engagement element CL1 is connected to the second carrier C2 serving as the fifth rotational part P5, the one side of the second engagement element CL2 is connected to the first ring gear R1 serving as the first rotational part P1, the other side of the second engagement element CL2 is connected to the second ring gear R2 serving as the fourth rotational part P4, the one side of the third engagement element B1 is connected to the second ring gear R2 serving as the fourth rotational part P4, and the other side of the third engagement element B1 is fixed to the housing 1.

In the modification of FIG. 5A, the one side of the first engagement element CL1 and the one side of the second engagement element CL2 can be commonly used (integrated), whereby the number of components of the unit 100 can be reduced.

In addition, the other side of the second engagement element CL2 and the one side of the third engagement element B1 can be commonly used (integrated), whereby the number of components of the unit 100 can be reduced.

When viewed in the axial direction, the first to third engagement elements CL1, CL2, and B1 may overlap the gear device 2. When these portions are overlapped, the dimension of the unit 100 in the radial direction can be reduced.

An engagement table of the modification of FIG. 5A is the same as that of the skeleton diagram of FIG. 1 illustrated in FIG. 2.

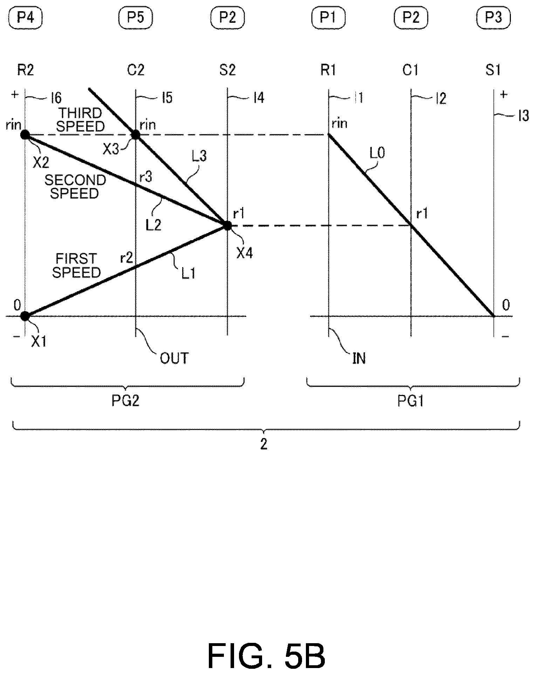

FIG. 5B is an alignment chart of the modification of FIG. 5A.

Three vertical lines l1 to l3 of the first planetary gear mechanism PG1 indicate, in order from a left side, the first ring gear R1 constituting the first rotational part P1, the first carrier C1 constituting the second rotational part P2, and the first sun gear S1 constituting the third rotational part P3. Three vertical lines 14 to l6 of the second planetary gear mechanism PG2 indicate, in order from a right side, the second sun gear S2 constituting the second rotational part P2, the second carrier C2 constituting the fifth rotational part P5, and the second ring gear R2 constituting the fourth rotational part P4.

In the alignment chart of FIG. 5B, rotational elements constituting the first to fifth rotational parts P1 to P5 are different from those illustrated in FIG. 3, but a connection relation between the first to fifth rotational parts P1 to P5 and the first to third engagement elements CL1, CL2, and B1 is the same as that illustrated in FIG. 3, so that the alignment charts are substantially the same.

Next, operations and effects of the embodiment of the present invention will be described.
(1) According to the embodiment of the present invention, in the examples illustrated in FIGS. 1, 4A, and 5A,
   the unit 100 includes:
   the input element IN;
   the output element OUT;
   the gear device 2 (FIGS. 3, 4B, and 5B) which is implemented by coupling respective rotational elements of the first planetary gear mechanism PG1 and the second planetary gear mechanism PG2 at one place and in which, on the alignment chart, the second rotational part P2 which is the coupled rotational elements is disposed between the first rotational part P1 and the third rotational part P3, and the fifth rotational part P5 is disposed between the second rotational part P2 and the fourth rotational part P4.

The input element IN is connected to the first rotational part P1.

The output element OUT is connected to the fifth rotational part P5.

The third rotational part P3 is fixed.

The fourth rotational part P4 is selectively connectable to the housing 1 or the first rotational part P1.

The fifth rotational part P5 is connectable to the first rotational part P1.

According to the present embodiment, the rotation speed of the second rotational part P2 with respect to the rotation speed of the first rotational part P1 is reduced at a constant ratio. By switching a connection destination of the fourth rotational part P4 in this state, two gear positions (first speed and second speed) can be achieved. In addition, by connecting the fifth rotational part P5 to the first rotational part P1 and directly connecting input and output, a gear position (third speed) of a transmission gear ratio of 1 can be achieved. That is, three gear positions can be achieved. Since the step ratio is reduced, an appropriate transmission gear ratio can be set according to a speed range.

(2) The gear device 2 can be implemented as illustrated in FIG. 1. In the example illustrated in FIG. 1,
the first planetary gear mechanism PG1 is a single pinion planetary gear mechanism including the first sun gear S1, the first carrier C1, and the first ring gear R1, the first carrier C1 being disposed between the first sun gear S1 and the first ring gear R1 on the alignment chart (FIG. 3).

The second planetary gear mechanism PG2 is a single pinion planetary gear mechanism including the second sun gear S2, the second carrier C2, and the second ring gear R2, the second carrier C2 being disposed between the second sun gear S2 and the second ring gear R2 on the alignment chart (FIG. 3).

The first rotational part P1 is implemented by the first sun gear S1.

The second rotational part P2 is implemented by coupling the first carrier C1 and the second ring gear R2.

The third rotational part P3 is implemented by the first ring gear R1.

The fourth rotational part P4 is implemented by the second sun gear S2.

The fifth rotational part P5 is implemented by the second carrier C2.

The gear device 2 may be implemented as illustrated in FIG. 4A. In the example illustrated in FIG. 4A,
the first planetary gear mechanism PG1 is a single pinion planetary gear mechanism including the first sun gear S1, the first carrier C1, and the first ring gear R1, the first carrier C1 being disposed between the first sun gear S1 and the first ring gear R1 on the alignment chart (FIG. 4B).

The second planetary gear mechanism PG2 is a single pinion planetary gear mechanism including the second ring gear R2, the second carrier C2, and the second sun gear S2, the second carrier C2 being disposed between the second ring gear R2 and the second sun gear S2 on the alignment chart (FIG. 4B).

The first rotational part P1 is implemented by the first sun gear S1.

The second rotational part P2 is implemented by coupling the first carrier C1 and the second sun gear S2.

The third rotational part P3 is implemented by the first ring gear R1.

The fourth rotational part P4 is implemented by the second ring gear R2.

The fifth rotational part P5 is implemented by the second carrier C2.

The gear device 2 may be implemented as illustrated in FIG. 5A. In the example illustrated in FIG. 5A,
the first planetary gear mechanism PG1 is a single pinion planetary gear mechanism including the first ring gear R1, the first carrier C1, and the first sun gear S1, the first carrier C1 being disposed between the first ring gear R1 and the first sun gear S1 on the alignment chart (FIG. 5B).

The second planetary gear mechanism PG2 is a single pinion planetary gear mechanism including the second ring gear R2, the second carrier C2, and the second sun gear S2, the second carrier C2 being disposed between the second ring gear R2 and the second sun gear S2 on the alignment chart (FIG. 5B).

The first rotational part P1 is implemented by the first ring gear R1.

The second rotational part P2 is implemented by coupling the first carrier C1 and the second sun gear S2.

The third rotational part P3 is implemented by the first sun gear S1.

The fourth rotational part P4 is implemented by the second ring gear R2.

The fifth rotational part P5 is implemented by the second carrier C2.

(3) A configuration in which the fourth rotational part P4 is selectively connectable to the housing 1 or the first rotational part P1 and a configuration in which the fifth rotational part P5 is connectable to the first rotational part P1 can be achieved by the first to third engagement elements CL1, CL2, and B1. In the examples illustrated in FIGS. 1, 4A, and 5A,
the unit 100 includes:
the first engagement element CL1;
the second engagement element CL2; and
the third engagement element B1.

The one side of the first engagement element CL1 is connected to the first rotational part P1.

The other side of the first engagement element CL1 is connected to the fifth rotational part P5.

The one side of the second engagement element CL2 is connected to the first rotational part P1.

The other side of the second engagement element CL2 is connected to the fourth rotational part P4.

The one side of the third engagement element B1 is connected to the fourth rotational part P4.

The other side of the third engagement element B1 is fixed to the housing 1.
(4) In the examples illustrated in FIGS. 1, 4A, and 5A, the one side of the first engagement element CL1 and the one side of the second engagement element CL2 may be implemented as an integrated component. Accordingly, the number of components of the unit 100 can be reduced.
(5) In the examples illustrated in FIGS. 1, 4A, and 5A, the other side of the second engagement element CL2 and the one side of the third engagement element B1 may be implemented as an integrated component. Accordingly, the number of components of the unit 100 can be reduced.

Although the embodiment of the present invention has been described above, the above embodiment merely exemplifies application examples of the present invention and does not intend to limit the technical scope of the present invention to the specific configurations of the above embodiment.

For example, the skeleton diagrams illustrated in FIGS. 1, 4A, and 5A are some of the application examples of the present invention, and the skeleton diagram of the unit to which the present invention is applied is not limited thereto.

Further, the first planetary gear mechanism PG1 and the second planetary gear mechanism PG2 are each a single pinion planetary gear mechanism, but may be double-pinion planetary gear mechanisms.

### DESCRIPTION OF REFERENCE SIGNS

1 housing (fixed element)
2 gear device
100 unit
CL1 first engagement element
CL2 second engagement element
B1 third engagement element
S1 first sun gear (first rotational element and third rotational element)
C1 first carrier (second rotational element)
R1 first ring gear (first rotational element and third rotational element)
S2 second sun gear (fourth rotational element and sixth rotational element)
C2 second carrier (fifth rotational element)
R2 second ring gear (fourth rotational element and sixth rotational element)
P1 first rotational part
P2 second rotational part
P3 third rotational part
P4 fourth rotational part
P5 fifth rotational part
IN input element
OUT output element
PG1 first planetary gear mechanism
PG2 second planetary gear mechanism

## Claims

1. A unit comprising:
an input element;
an output element; and
a gear device which is implemented by coupling respective rotational elements of a first planetary gear mechanism and a second planetary gear mechanism at one place and in which, on an alignment chart, a second rotational part which is the coupled rotational elements is disposed between a first rotational part and a third rotational part, and a fifth rotational part is disposed between the second rotational part and a fourth rotational part, wherein
the input element is connected to the first rotational part,
the output element is connected to the fifth rotational part,
the third rotational part is fixed,
the fourth rotational part is selectively connectable to a fixed element or the first rotational part, and
the fifth rotational part is connectable to the first rotational part.

2. The unit according to claim 1, wherein
the first planetary gear mechanism is a planetary gear mechanism including a first rotational element, a second rotational element, and a third rotational element, the second rotational element being disposed between the first rotational element and the third rotational element on the alignment chart,
the second planetary gear mechanism is a planetary gear mechanism including a fourth rotational element, a fifth rotational element, and a sixth rotational element, the fifth rotational element being disposed between the fourth rotational element and the sixth rotational element on the alignment chart,
the first rotational part is implemented by the first rotational element,
the second rotational part is implemented by coupling the second rotational element and the sixth rotational element,
the third rotational part is implemented by the third rotational element,
the fourth rotational part is implemented by the fourth rotational element, and
the fifth rotational part is implemented by the fifth rotational element.

3. The unit according to claim 1 or 2, further comprising:
a first engagement element;
a second engagement element; and
a third engagement element, wherein
one side of the first engagement element is connected to the first rotational part,
the other side of the first engagement element is connected to the fifth rotational part,
one side of the second engagement element is connected to the first rotational part,
the other side of the second engagement element is connected to the fourth rotational part,
one side of the third engagement element is connected to the fourth rotational part, and
the other side of the third engagement element is fixed to the fixed element.

4. The unit according to claim 3, wherein
the one side of the first engagement element and the one side of the second engagement element are implemented as an integrated component.

5. The unit according to claim 3, wherein
the other side of the second engagement element and the one side of the third engagement element are implemented as an integrated component.
